# EUROPÄISCHE PATENTSCHRIFT

(11) **EP 3 260 481 B1**
(45) Veröffentlichungstag und Bekanntmachung des Hinweises auf die Patenterteilung: **23.02.2022**
(21) Anmeldenummer: 16175259.7
(22) Anmeldetag: 20.06.2016
(51) Int. Cl.: C08J 3/24, C08G 59/62, C08G 18/00, C09J 175/04, C08J 5/04, C08G 59/68, C08G 59/40, C08G 18/76, C08G 18/48, C08G 18/20

(54) **GEHÄRTETE ZUSAMMENSETZUNG MIT HOHER SCHLAGFESTIGKEIT UND TEMPERATURBESTÄNDIGKEIT, BASIEREND AUF EINEM EPOXIDHARZ UND EINEM POLYISOCYANAT**
CURED COMPOSITION HAVING HIGH IMPACT STENGTH AND TEMPERATURE RESISTANCE, BEING BASED ON AN EPOXIDE RESIN AND A POLYISOCYANATE
COMPOSITION RETICULÉ AYANT HAUTE RÉSISTANCE AUX CHOCS ET STABILITÉ DE TEMPÉRATURE, À BASE D'UNE RÉSINE EPOXY ET D'UN POLYISOCYANATE

(43) Veröffentlichungstag der Anmeldung: 27.12.2017
(73) Patentinhaber: Henkel AG & Co. KGaA, 40589 Düsseldorf (DE)
(72) Erfinder: HOLTGREWE, Christian, 40225 Düsseldorf (DE); KÜSTER, Harald, 40625 Düsseldorf (DE); BACHON, Thomas, 40597 Düsseldorf (DE); SANCHIS OTERO, Guadalupe, 40229 Düsseldorf (DE)

(56) Entgegenhaltungen:
- EP-A1- 0 482 331
- WO-A1-2016/102358
- US-A1- 2016 002 496
- DATABASE WPI Week 198639 Thomson Scientific, London, GB; AN 1986-254858 XP002759842, & JP S61 181816 A (SUMITOMO BAKELITE CO) 14. August 1986 (1986-08-14)

## Beschreibung

Die vorliegende Erfindung betrifft ein Verfahren zur Herstellung einer gehärteten Zusammensetzung, die mindestens einen Oxazolidinonring und mindestens einen Isocyanuratring aufweist und durch diese vernetzt ist, ausgehend von einem flüssigen Reaktionsgemisch, das bezogen auf dessen Gesamtgewicht mindestens ein Epoxidharz, mindestens ein Polyisocyanat, mindestens ein Polyol und mindestens eine Katalysator-Zusammensetzung enthält, sowie die dadurch erhältliche, gehärtete Zusammensetzung.

Gehärtete Polymerzusammensetzungen werden bei ihrer Herstellung und Anwendung hohen mechanischen und thermischen Belastungen ausgesetzt. Um die Schlagzähigkeit der Polymerzusammensetzungen zu erhöhen, werden den Harzsystemen, aus denen die Zusammensetzungen gefertigt werden, Zähigkeitsvermittler (so genannte "Toughener") hinzugesetzt. Die im Stand der Technik bekannten Zähigkeitsvermittler bewirken eine Erhöhung der Schlagzähigkeit, jedoch auch eine Herabsetzung der Glasübergangstemperatur, so dass sie für den Einsatz bei erhöhter Temperatur ungeeignet sind.

Ferner sind kommerziell verfügbare Polymerzusammensetzungen, die hohe Glasübergangstemperaturen aufweisen, aufgrund von geringen Lagerstabilitäten und langen Härtungszyklen nachteilig. Weitere mögliche Harzsysteme sind oftmals fest oder hochviskos, so dass sie bei den häufig verwendeten RTM-Verfahren, die flüssige Harzsysteme erfordern, nicht einsetzbar sind.

US2016/002496 A1 offenbart ein Verfahren zur Herstellung von Urethan/lsocyanurat-polymeren unter Verwendung eines aromatischen Polyisocyanats. Bei der Herstellung kann optional ein Polyol verwendet werden. Als eine weitere optionale Komponente könnte ein Epoxid verwendet werden. In EP 0 482 331 A1 werden Reaktivsysteme beschrieben, die aus organischen Polyisocyanaten, organischen Polyepoxiden, Polymermodifikatoren und speziellen Katalysatoren bestehen.

Die vorliegende Erfindung basiert auf der Erkenntnis der Erfinder, dass durch den Zusatz von Polyolen zu bei Raumtemperatur stabilen Polyepoxid- bzw. Polyisocyanat-Monomeren mit niedriger Viskosität in bestimmten Verhältnissen in kurzen Härtungszyklen Oxazolidinon- und Isocyanurat-vernetzte Kunststoffe hergestellt werden können, die Schlagzähigkeit erhöht wird ohne dabei die Glasübergangstemperatur herabzusetzen. Somit können die Kunststoffe in Fertigungsverfahren und bei ihren späteren Anwendungen, in denen diese hohen Temperaturen ausgesetzt sind, eingesetzt werden. Die so erhältlichen Kunststoffe zeigen ferner vorteilhafte mechanische Eigenschaften, insbesondere hohe Schlagzähigkeiten, die für den Einsatz im Automobilbau geeignet sind. Des Weiteren können Leistung und Eigenschaften der so erhältlichen Polymere durch Kontrolle der Härtungsbedingungen und Art der Katalysatorsysteme über einen weiten Bereich variiert werden. Schließlich sind solche Systeme auch dahingehend vorteilhaft, als dass sie bei Raumtemperatur stabil bleiben und daher nicht gekühlt gelagert werden müssen.

Es wurde nun überraschenderweise gefunden, dass Reaktionsgemische, die bezogen auf deren Gesamtgewicht mindestens ein flüssiges, aromatisches Epoxidharz, mindestens ein flüssiges, aromatisches Polyisocyanat, 1 bis 20 Gew.-% mindestens eines Polyols und mindestens eine geeignete Katalysator-Zusammensetzung umfassen, wobei ein Überschuss an NCO-Gruppen gegenüber den Epoxidgruppen vorliegt, bei der Aushärtung Oxazolidinon- und Isocyanurat-vernetzte Polymerzusammensetzungen ergeben, die eine erhöhte mechanische Beständigkeit aufweisen und daher für die Herstellung von faserverstärkten Kunststoffformteilen, wie Automobilteilen, besonders geeignet sind. Durch den Einsatz von 1 bis 20 Gew.-% mindestens eines Polyols bezogen auf das Gesamtgewicht des Reaktionsgemischs wird die Schlagzähigkeit der erhaltenen gehärteten Polymerzusammensetzung erhöht ohne die Glasübergangstemperatur herabzusetzen. Dieses Phänom wird überraschender Weise durch die Verwendung eines molaren Überschusses an NCO-Gruppen gegenüber Epoxidgruppen verstärkt.

Die vorliegende Erfindung betrifft daher in einem ersten Aspekt ein Verfahren zur Herstellung einer gehärteten Polymerzusammensetzung, die mindestens einen Oxazolidinonring und mindestens einen Isocyanuratring umfasst, wobei das Verfahren die Schritte umfasst:
(1) Bereitstellen eines flüssigen Reaktionsgemisches umfassend bezogen auf dessen Gesamtgewicht
   (a) 9,0 bis 82,5 Gew.-% mindestens eines flüssigen, aromatischen Epoxidharzes;
   (b) 16,5 bis 90,0 Gew.-% mindestens ein flüssigen, aromatischen Polyisocyanats;
   (c) 1,0 bis 20,0 Gew.-% mindestens eines Polyols; und
   (d) 0,01 bis 10,0 Gew.-% mindestens einer Katalysator-Zusammensetzung, wobei das mindestens eine Epoxidharz bezogen auf das mindestens eine Polyisocyanat in Mengen eingesetzt wird, dass das molare Äquivalentverhältnis von Isocyanat- zu Epoxidgruppen größer 1,2 ist, bevorzugter zwischen 1,2 und 10, noch bevorzugter zwischen 1,25 und 5, noch weiter bevorzugt zwischen 1,3 und 4 und am bevorzugtesten zwischen 1,4 und 2 beträgt; und
(2) Härten des Reaktionsgemisches, um eine gehärtete Polymerzusammensetzung, die mindestens einen Oxazolidinonring und mindestens einen Isocyanuratring umfasst, zu erhalten.

Die vorliegende Erfindung betrifft in einem weiteren Aspekt eine faserverstärkte, gehärtete Zusammensetzung, die mittels der hierin beschriebenen Verfahren erhältlich ist.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen KatalysatorZusammensetzungen bezieht sich diese Angabe nicht auf die absolute Menge an Molekülen, sondern auf die Art des Bestandteils. "Mindestens ein Polyol" bedeutet daher beispielsweise ein oder mehrere verschiedene Polyole, d.h. eine oder mehrere verschiedene Arten von Polyolen. Zusammen mit Mengenangaben beziehen sich die Mengenangaben auf die Gesamtmenge der entsprechend bezeichneten Art von Bestandteil, wie bereits oben definiert.

"Flüssig", wie hierin verwendet, bezeichnet bei Raumtemperatur (20°C) und Normaldruck (1013 mbar) fließfähige Zusammensetzungen.

Die Viskosität der hierin beschriebenen flüssigen Zusammensetzung ist insbesondere niedrig genug, damit die Zusammensetzung pumpbar ist und beispielsweise Fasermaterialien, wie sie für faserverstärkte Kunststoffteile verwendet werden, benetzen und imprägnieren zu können. In verschiedenen Ausführungsformen hat das Reaktionsgemisch bei einer Temperatur von 80°C eine Viskosität von <100 mPas. Zur Bestimmung der Viskosität wird die Harzmischung bei Raumtemperatur mit einem geeigneten Mischer hergestellt und auf einem Platte/Platte Rheometer in Oszillation die Viskosität bei steigender Temperatur mit einer Heizrate von 50 K/min bestimmt.

Das Epoxidharz kann Epoxidgruppen-haltige Monomere, Präpolymere und Polymere sowie Gemische der vorgenannten umfassen und wird im Folgenden auch als Epoxid bzw. Epoxidgruppen-haltiges Harz bezeichnet. Geeignete Epoxidgruppen-haltige Harze sind insbesondere Harze mit 1 bis 10, bevorzugt 2 bis 10 Epoxidgruppen pro Molekül. "Epoxidgruppen", wie hierin verwendet, bezieht sich auf 1,2-Epoxidgruppen (Oxirane).

Die hierin verwendbaren Epoxidharze können variieren und schließen konventionelle und kommerziell erhältlich Epoxidharze, die jeweils individuell oder in Kombination von zwei oder mehr verschiedenen Epoxidharzen eingesetzt werden können, ein. Bei der Auswahl der Epoxidharze spielen nicht nur die Eigenschaften des Endprodukts, sondern auch die Eigenschaften des Epoxidharzes, wie zum Beispiel die Viskosität und andere Eigenschaften, die die Verarbeitbarkeit beeinflussen, eine Rolle.

Das Epoxidgruppen-haltige Harz ist eine flüssige, aromatische Epoxidverbindung. Beispiele für geeignete Harze schließen ein, ohne darauf beschränkt zu sein, (Poly)Glycidylether, die üblicherweise durch Umsetzung von Epichlorhydrin oder Epibromhydrin mit Polyphenolen in Gegenwart von Alkali erhalten werden oder auch (Poly)Glycidylether von Phenol-Formaldehyd-Novolak-Harzen, alkylsubstituierte Phenol-Formaldehydharze (Epoxy-Novolak-Harze), Phenol-Hydroxybenzaldehyd-Harze, Cresol-Hydroxybenzaldehyd-Harze, Dicyclopentadien-Phenol-Harze und Dicyclopentadien-substituierte Phenol-Harze. Für diesen Zweck geeignete Polyphenole sind beispielsweise Resorcin, Brenzkatechin, Hydrochinon, Bisphenol A (2,2-Bis(4-hydroxyphenyl)propan), Bisphenol F (Bis(4-hydroxyphenyl)methan), 1,1-Bis(4-hydroxyphenyl)isobutan, 4,4-Dihydroxybenzophenon, 1,1-Bis(4-hydroxyphenyl)ethan und 1,5-Hydroxynaphthalin. Ebenfalls geeignet sind Diglycidylether von ethoxyliertem Resorcin (DGER), Diglcydidylether von Resorcin, Brenzkatechin, Hydrochinon, Bisphenol, Bisphenol A, Bisphenol AP (1,1-Bis(4-hydroxyphenyl)-1-Phenylethan), Bisphenol F, Bisphenol K, Bisphenol S, und Tetramethylbiphenol.

Weitere geeignete Epoxidharze sind im Stand der Technik bekannt und können beispielsweise Lee H. & Neville, K., Handbook of Epoxy Resins, McGraw-Hill Book Company, Neuauflage von 1982 entnommen werden.

Besonders bevorzugte Epoxidgruppen-haltige Verbindungen sind aromatische Glycidylether, insbesondere Diglycidylether, ganz besonders bevorzugt solche auf Basis von aromatischen Glycidylether-Monomeren. Beispiele dafür sind, ohne Einschränkung, Di- oder Polyglycidylether von polyhydrischen Phenolen, die durch Umsetzen eines polyhydrischen Phenols mit einem Überschuss an Chlorhydrin, wie z.B. Epichlorohydrin, erhalten werden können. Solche polyhydrischen Phenole schließen Resorcinol, Bis(4-hydroxyphenyl)methan (Bisphenol F), 2,2-bis(4-Hydroxyphenyl)propan (Bisphenol A), 2,2-bis(4'-Hydroxy-3',5'-dibromophenyl)propan, 1,1,2,2-tetrakis(4'-Hydroxy-phenyl)ethan oder Kondensate von Phenolen mit Formaldehyd, die unter sauren Bedingungen erhalten werden, wie Phenolnovolake und Cresolnovolake, ein.

Diglycidylether von Bisphenol A sind beispielsweise als DER 331 (flüssiges Bisphenol A Epoxidharz) und DER 332 (Diglycidylether von Bisphenol A) von Dow Chemical Company, Midland, Michigan, erhältlich. Obwohl nicht speziell erwähnt, können auch andere Epoxidharze, die unter den Handelsnamen DER und DEN von Dow Chemical Company erhältlich sind, verwendet werden.

Das Polyisocyanat enthält zwei oder mehr Isocyanatgruppen und schließt jedes bekannte und für den erfindungsgemäßen Zweck geeignete Isocyanat ein und wird im Folgenden auch teilweise als Isocyanat bzw. Isocyanatgruppen-haltiges Harz bezeichnet.

Als Polyisocyanate in der Polyisocyanatkomponente sind Isocyanate mit zwei oder mehr Isocyanatgruppen geeignet. Vorzugsweise enthalten die Polyisocyanate 2 bis 10, vorzugsweise 2 bis 5, bevorzugt 2 bis 4, insbesondere genau 2 Isocyanatgruppen pro Molekül. Die Verwendung von Isocyanaten mit einer Funktionalität von mehr als zwei, kann unter Umständen vorteilhaft sein, da derartige Polyisocyanate als Vernetzer geeignet sind.

Als das mindestens eine Polyisocyanat der Polyisocyanatkomponente wird ein aromatisches Polyisocyanat eingesetzt werden. In einem aromatischen Polyisocyanat sind die NCO-Gruppen an aromatischen Kohlenstoffatomen gebunden. Beispiele für geeignete aromatische Polyisocyanate sind 1,5-Naphthylendiisocyanat, 2,4'-, 2,2'- oder 4,4'-Diphenylmethandiisocyanat (MDI), Xylylendiisocyanat (XDI), m- und p-Tetramethylxylylendiisocyanat (TMXDI), 2,4- oder 2,6-Toluylendiisocyanat (TDI), Di- und Tetraalkyldiphenyl-methandiisocyanat, 3,3'-Dimethyl-diphenyl-4,4'-diisocyanat (TODI) 1,3-Phenylendiisocyanat, 1,4-Phenylendiisocyanat, 4,4'-Dibenzyldiisocyanat.

Die Polyisocyanatkomponente kann auch Anteile von niedermolekularen Prepolymeren enthalten, beispielsweise Umsetzungsprodukte von MDI oder TDI mit niedermolekularen Diolen oder Triolen wie z.B. Ethylenglykol, Diethyenglykol, Propylenglykol, Dipropylenglykol, Triethylenglykol, Glyzerin oder Trimethylolpropan. Diese Prepolymere können durch Umsetzung eines Überschusses von monomerem Polyisocyanat in Gegenwart von Diolen der Triolen hergestellt werden. Dabei liegt das zahlenmittlere Molekulargewicht der Diole und Triole im Allgemeinen unterhalb von 1000 g/mol. Gegebenenfalls kann das Umsetzungsprodukt durch Destillation von monomeren aromatischen Isocyanaten befreit werden.

Vorzugsweise weist das mindestens eine Polyisocyanat einen NCO-Gehalt von mehr als 25 Gew.-%, weiter bevorzugt mehr als 28 Gew.-%, besonders bevorzugt mehr als 30 Gew.-%, insbesondere bevorzugt von 30 bis 50 Gew.-%, bezogen auf das mindestens eine Polyisocyanat, auf. Der Massenanteil bezieht sich bei Verwendung nur eines Polyisocyanats auf die eingesetzte Menge dieses Polyisocyanats, bei Verwendung einer Mischung von Polyisocyanaten dagegen auf die eingesetzte Menge der Mischung dieser Polyisocyanate.

Vorzugsweise hat das mindestens eine Polyisocyanat eine Viskosität von weniger als 80 mPas, insbesondere von 30 bis 60 mPas (DIN ISO 2555, Brookfield-Viskosimeter RVT, Spindel Nr. 3, 25°C; 50 UpM).

Es ist insbesondere bevorzugt, dass das mindestens eine Polyisocyanat ein zahlenmittleres Molekulargewicht von weniger als 1500 g/mol, besonders bevorzugt weniger als 1000 g/mol aufweist.

Besonders geeignete Isocyanatgruppen-haltige Harze sind Methylendiphenyldiisocyanat (MDI), Toluol-2,4-diisocyanat (TDI), polymeres Diphenylmethandiisocyanat (PMDI) und Mischungen der vorgenannten. Diese Polyisocyanate sind beispielsweise unter dem Markennamen Desmodur^{®} von Bayer AG (DE) im Handel erhältlich.

Besonders bevorzugt sind aromatische Polyisocyanat-Monomere, insbesondere aromatische Diisocyanate wie MDI und TDI.

Es ist generell bevorzugt, dass sowohl die eingesetzten Epoxide als auch die eingesetzten Isocyanate Monomere sind, insbesondere bei Standardbedingungen (20°C, 1013mbar) flüssige, niedrigviskose Monomere. Diese sind insbesondere deshalb vorteilhaft, weil sie im Vergleich mit anderen, höherfunktionellen Epoxidharzen deutlich stabiler, insbesondere lagerstabiler sind, und nicht gekühlt gelagert werden müssen.

In verschiedenen Ausführungsformen der Erfindung kann das Reaktionsgemisch mehrere verschiedene Epoxidgruppen-haltige Verbindungen und/oder mehrere verschiedene Isocyanatgruppen-haltige Verbindungen enthalten.

Das flüssige Reaktionsgemisch umfasst ferner mindestens ein Polyol. "Polyole", wie hierin verwendet, bezieht sich auf Verbindungen, die mindestens 2 Hydroxyl-Gruppen (-OH) pro Molekül aufweisen. Das mindestens eine Polyol kann beispielsweise 2 oder mehr Hydroxylgruppen aufweisen, wie 3, 4, 5, 6, 7, 8, 9, 10 oder mehr und eine cyclische, lineare oder verzweigte Struktur haben. Besonders bevorzugt weist das mindestens eine Polyol im Mittel 2 bis 10, insbesondere 2 bis 6, bevorzugt 2 bis 3 Hydroxylgruppen auf. Besonders bevorzugt sind Diole und/oder Triole. Die Polyole nach der Erfindung können alle im Stand der Technik bekannten und erfindungsgemäß geeigneten Polyole sein. In verschiedenen Ausführungsformen kann das Polyol eine zahlenmittleres Molekulargewicht von 120 bis 6.000 g/mol aufweisen, wie beispielsweise von 120 bis 6.000 g/mol, von 120 bis 4.000 g/mol von 120 bis 2.000 g/mol, von 120 g/mol bis 1.000 g/mol, von 500 g/mol bis 6.000 g/mol, von 500 g/mol bis 4.000 g/mol, von 500 g/mol bis 2.000 g/mol, von 500 g/mol bis 1.000 g/mol, von 1.000 g/mol bis 6.000 g/mol, von 1.000 g/mol bis 4.000 g/mol, von 1.000 g/mol bis 2.000 g/mol oder von 2.000 g/mol.

In einer bevorzugten Ausführungsform ist das mindestens eine Polyol ein Polyetherpolyol, ein Polyesterpolyol oder Mischungen davon. So kann das Polyetherpolyol ein Polyoxyalkylenpolyol sein. Das mindestens eine Polyol kann auch ein Glykol sein. Glykole sind Verbindungen, die sich von Diolen ableiten lassen, beispielsweise durch Reaktion von mindestens 2 Diolen unter Wasserabspaltung und Bildung von mindestens einer Ethergruppe. "Diole", wie hierin verwendet, sind Verbindungen, die 2 Alkoholgruppen aufweisen. Die Alkoholgruppen können dabei vicinal, also benachbart, oder nicht vicinal angeordnet sein. Diole gemäß der Erfindung können, ohne auf diese beschränkt zu sein, Ethylendiol, Propylendiol, Butylendiol, Pentylendiol, Hexylendiol, Heptylendiol und Octylendiol sein. Die Glykole können sich aus einem Diol oder aus Mischungen von verschiedenen Diolen ableiten. Vorzugsweise ist das erfindungsgemäße Polyol ausgewählt aus der Gruppe bestehend aus Polyethylenglykol, Polypropylenglykol, Polytetramethylenglykol, Polyhexamethylenglykol und Mischungen davon. Besonders bevorzugt ist das Polyol ausgewählt aus der Gruppe bestehend aus Polyethylenglykol, Polypropylenglykol oder Mischungen davon und noch bevorzugter ist das Polyol Propylenglykol. Das Propylenglykol kann ein zahlenmittleres Molekulargewicht von 120 bis 6.000 g/mol aufweisen. Bevorzugt weist das erfindungsgemäße Propylenglykol ein zahlenmittleres Molekulargewicht von 120 bis 6.000 g/mol, noch bevorzugter von 1.000 bis 3.000 g/mol und am bevorzugtesten von 2.000 g/mol auf.

Die im vorliegenden Text angegebenen Molekulargewichte beziehen sich, soweit nicht anders angegeben, auf das Zahlenmittel des Molekulargewichts (Mₙ). Das zahlenmittlere Molekulargewicht kann mittels Gelpermeationschromatographie gemäß DIN 55672-1:2007-08 mit THF als Eluent bestimmt werden. Wenn nicht anders angegeben, sind alle angegebenen Molekulargewichte solche, die mittels GPC bestimmt wurden.

Wie oben bereits beschreiben, kann das erfindungsgemäße Polyol auch ein Polyol mit mehr als 2 Alkoholgruppen sein. Beispiele für solche Polyole schließen ein, ohne auf diese beschränkt zu sein, Glycerin, Sorbit, Mannit, Xylitol, Maltit, Lactit, Erythrit, Isomalt, Ribit, Galaktit, Idit, Arabit und Polyglycitol.

Der Gewichtsanteil des mindestens einen Polyols kann von 1,0 bis 20,0 Gew.-% bezogen auf das Reaktionsgemisch variiert werden und hängt von dem mindestens einem Polyol und dessen chemischen und physikalischen Eigenschaften sowie von den gewünschten physikalischen und chemischen Eigenschaften der gehärteten Zusammensetzung ab. In einer bevorzugten Ausführungsform enthält das flüssige Reaktionsgemisch 2,0 bis 15,0 Gew.-%, bevorzugter 4,0 bis 12,0 Gew.-% Polyol. Durch den Einsatz dieser Polyole in diesen Gewichtsbereichen weisen die Polymerzusammensetzungen nach der Erfindung eine erhöhte mechanische Beständigkeit, insbesondere eine erhöhte Schlagzähigkeit, auf ohne die Glasübergangstemperatur herabzusetzen, so dass die erhaltenen Zusammensetzungen bei der Fertigung und ihrer zweckmäßigen Bestimmung erhöhten Temperaturen ausgesetzt werden können. Daher sind diese für die Herstellung von faserverstärkten Kunststoffformteilen, wie Automobilteilen, besonders geeignet.

Das Gewichtsverhältnis des mindestens einen Polyisocyanats und des mindestens einen Epoxidharzes kann ebenfalls variiert werden und hängt von den jeweils verwendeten Verbindungen und deren chemischen und physikalischen Eigenschaften sowie von den gewünschten physikalischen und chemischen Eigenschaften der gehärteten Zusammensetzung ab. Generell werden das Polyisocyanat und das Epoxid in solchen Mengen eingesetzt, dass das molare Äquivalentverhältnis von Isocyanat- zu Epoxidgruppen mindestens 1,2, insbesondere mindestens 1,25, bevorzugt mindestens 1,3, noch bevorzugter mindestens 1,4, insbesondere bevorzugt mindestens 1,5 beträgt. Bevorzugt ist das molare Äquivalentverhältnis von Isocyanatzu Epoxidgruppen maximal 10, insbesondere maximal 5, bevorzugt maximal 3, besonders bevorzugt maximal 2. "Molares Äquivalentverhältnis" bezieht sich hierbei auf das molare Verhältnis zwischen Epoxidgruppen und Isocyanatgruppen. Das molare Äquivalentverhältnis wird dabei als Quotient von Isocyanatgruppen zu Epoxidgrupen gebildet, wobei eine doppelte Anzahl von Isocyanatgruppen zu Epoxidgrupen einem molaren Äquivalentverhältnis von 2 entsprechen. Ein molares Äquivalentverhältnis von mindestens 1,2 bedeutet daher beispielsweise, dass auf 1 Mol Epoxidgruppen mindestens 1,2 Mol Isocyanatgruppen kommen. Diese bedeutet, dass die Isocynatgruppen in einem molaren Überschuss zu den Epoxidgruppen vorliegen. Bevorzugt ist das molare Äquivalentverhältnis von Isocyanat- zu Epoxidgruppen zwischen 1,2 und 10, bevorzugter zwischen 1,2 und 5, noch bevorzugter zwischen 1,25 und 5, noch weiter bevorzugt zwischen 1,3 und 2. Die Erfinder haben herausgefunden, dass sich durch die Verwendung solcher Mengenverhältnisse besonders vorteilhafte Eigenschaften hinsichtlich der Glasübergangstemperatur, des Elastizitätsmoduls und der Schlagzähigkeit ergeben.

In verschiedenen Ausführungsformen der Erfindung werden bezogen auf das Gesamtgewicht des Reaktionsgemisches 9,0 bis 82,5 Gew.-%, vorzugsweise 15,0 bis 65,0 Gew.-%, noch bevorzugter 20,0 bis 60,0 Gew.-%, am bevorzugtesten 30,0 bis 50,0 Gew.-% mindestens eines flüssigen, aromatischen Epoxidharzes eingesetzt. In verschiedenen Ausführungsformen der Erfindung werden bezogen auf das Gesamtgewicht des Reaktionsgemisches 16,5 bis 90,0 Gew.-%, vorzugsweise 20,0 bis 80,0 Gew.-%, noch bevorzugter 30,0 bis 75,0 Gew.-%, am bevorzugtesten 35,0 bis 70,0 Gew.-% des mindestens einen flüssigen, aromatischen Polyisocyanats eingesetzt.

Als weiteren Bestandteil umfasst das Reaktionsgemisch eine Katalysator-Zusammensetzung. In verschiedenen Ausführungsformen umfasst die Katalysatorzusammensetzung keine Härter, d.h. Verbindungen, die eine Epoxid-Polyadditionsreaktion eingehen, wie beispielsweise Dicyandiamid, DDS (Diaminodiphenylsulfon) und ähnliche Verbindungen, sondern nur Verbindungen, die die Polymerisation von Polyisocyanat und Epoxid katalysieren. Das Reaktionsgemisch ist daher in bevorzugten Ausführungsformen frei von Dicyandiamid oder DDS, bevorzugt insgesamt frei von Härtern wie Dicyandiamid oder DDS.

"Frei von", wie in diesem Zusammenhang verwendet, bedeutet, dass die Menge des entsprechenden Stoffs in dem Reaktionsgemisch weniger als 0,05 Gew.-%, vorzugsweise weniger als 0,01 Gew.-%, noch bevorzugter weniger als 0,001 Gew.-%, bezogen auf das Gesamtgewicht des Reaktionsgemischs beträgt.

Die Katalysator-Zusammensetzung kann einen oder mehrere Katalysatoren enthalten. In verschiedenen Ausführungsformen ist sie zur Bildung von Oxazolidinon- und Isocyanuratringen aus den angegebenen Bestandteilen geeignet.

In einer bevorzugten Ausführungsform ist der Katalysator eine Base, wobei die als Katalysator eingesetzte Base vorzugsweise eine nichtionische, Stickstoff-haltige Base, die mindestens ein tertiäres Stickstoffatom und/oder ein Imin-Stickstoffatom umfasst, insbesondere ein Imidazol oder Imidazolidin ist. Es ist ferner bevorzugt, dass der Katalysator bzw. die Base nicht auf einem Imidazolium-Kation basiert.

Der Begriff "tertiär", wie hierin verwendet, gibt an, dass an das Stickstoffatom, das in der mindestens einen Base enthalten ist, drei organische Reste kovalent über Einfachbindungen gebunden sind. Alternativ kann die mindestens eine Base ein Imin-Stickstoffatom enthalten. Der Begriff "Imine", wie hierhin verwendet, bezieht sich auf die bekannte Stoffklasse, und gibt an, dass das Stickstoffatom eine kovalente Doppelbindung zu einem organischen Rest und eine kovalente Einfachbindung zu einem weiteren organischen Rest aufweist. Imine sind Schiff'sche Basen. Bevorzugt handelt es sich bei den Basen um nichtblockierte Basen. Das heißt, dass die Basen in reiner bzw. unbehandelter bzw. nicht-reagierter Form eingesetzt werden, und nicht in Form eines Salzes oder beispielsweise als Phenol-blockierte Form. Durch eine Blockierung werden die Wirkung des Katalysators und damit die Reaktionsgeschwindigkeit und die resultierenden Eigenschaften negativ beeinflusst.

Die Katalysator-Zusammensetzung kann, in verschiedenen Ausführungsformen, mehrere der vorstehend beschriebenen nichtionische Basen enthalten, beispielsweise eine Base mit einem Imin-Stickstoff und eine Base mit einem tertiären Stickstoffatom. Die nichtionische Base kann auch sowohl ein tertiäres Amin als auch ein Imin sein, indem sie sowohl ein tertiäres Stickstoffatom als auch ein Imin-Stickstoff enthält.

Bevorzugt handelt es sich bei der eingesetzten Base um eine nichtionische, Stickstoff-haltige Base, die mindestens ein tertiäres Stickstoffatom und/oder ein Imin-Stickstoffatom umfasst und zudem eine cyclische Struktur aufweist.

In verschiedenen Ausführungsformen ist die mindestens eine nichtionische Base ein tertiäres Amin der Formel (I) NR₁R₂R₃ und/oder ein Imin der Formel (II) N(=R₄)R₅.

Die Reste R₁ bis R₃ und R₅ werden jeweils unabhängig voneinander ausgewählt aus der Gruppe bestehend aus substituiertem oder unsubstituiertem, linearem oder verzweigtem Alkyl mit 1 bis 20 Kohlenstoffatomen, substituiertem oder unsubstituiertem, linearem oder verzweigtem Alkenyl mit 3 bis 20 Kohlenstoffatomen und substituiertem oder unsubstituiertem Aryl mit 5 bis 20 Kohlenstoffatomen, oder mindestens zwei von R₁ bis R₃ bilden gemeinsam mit dem Stickstoffatom, an das sie gebunden sind, einen 5- bis 10-gliedrigen, heteroalicyclischen Ring oder Heteroaryl-Ring, der optional ein oder mehrere weitere Stickstoffatome, insbesondere 1 weiteres Stickstoffatom, enthält. Bevorzugt bilden mindestens zwei von R₁ bis R₃ gemeinsam mit dem Stickstoffatom, an das sie gebunden sind, einen 5- bis 10-gliedrigen, heteroalicyclischen Ring oder Heteroaryl-Ring, der optional ein oder mehrere weitere Stickstoffatome, insbesondere 1 weiteres Stickstoffatom, enthält.

R₄ ist ein substituiertes oder unsubstituiertes, lineares oder verzweigtes Alkylenyl mit 3 bis 20 Kohlenstoffatomen oder R₄ und R₅ bilden gemeinsam mit dem Stickstoffatom, an das sie gebunden sind, einen 5- bis 10-gliedrigen, heteroalicyclischen Ring oder Heteroaryl-Ring, der optional weitere Stickstoffatome enthält. Bevorzugt bilden R₄ und R₅ bilden gemeinsam mit dem Stickstoffatom, an das sie gebunden sind, einen 5- bis 10-gliedrigen, heteroalicyclischen Ring oder Heteroaryl-Ring, der optional weitere Stickstoffatome enthält.

"Alkylenyl", wie hierin verwendet, bezieht sich auf einen Alkylrest, der über eine Doppelbindung an das Stickstoffatom gebunden ist. Falls substituiert, sind die Substituenten wie oben für Alkylreste beschrieben definiert.

In verschiedenen Ausführungsformen der Erfindung sind die tertiären Aminbasen bzw. die Iminbasen, cyclische Verbindungen, die bevorzugt mindestens zwei Stickstoffatome enthalten, d.h. mindestens zwei der Reste R₁ bis R₅ kombinieren miteinander um mit dem Stickstoffatom an das sie gebunden sind, einen Ring zu bilden, und enthalten ferner ein weiteres Stickstoffatom in Form eines Restes -NRR', wobei das Stickstoffatom ein Ringatom ist und der Rest R oder R' an der Ringbildung beteiligt ist. Besonders bevorzugt sind Basen auf Basis von Imidazol oder Imidazolidin. In verschiedenen Ausführungsformen sind die Basen daher beispielsweise Imidazolderivate, wie beispielsweise 1-Alkyl-lmidazol oder 2,4-Dialkylimidazol.

In verschiedenen Ausführungsformen ist die mindestens eine nichtionische Base ausgewählt aus der Gruppe bestehend aus 1-Methylimidazol, 2,4-Ethylmethylimidazol (EMI), 4-Dimethylaminopyridin, 1,4-Diazabicyclo[2.2.2]octan (DABCO), 1,8-Diazabicyclo[5.4.0]undec-7-en (DBU), 1,5-Diazobicyclo[3.4.0]non-5-en (DBN) und Mischungen davon. Vorzugsweise ist die Base ausgewählt aus der Gruppe bestehend aus EMI, DBU und Mischungen davon.

In einer bevorzugten Ausführungsform sind mindestens zwei Basen, von den beschriebenen Basen, enthalten, insbesondere genau zwei. Durch die Verwendung von zwei unterschiedlichen Basen kann die Reaktion beschleunigt werden oder die Reaktionsgeschwindigkeit kann gezielt gesteuert und kontrolliert werden. Zudem kann sich der Einsatz von zwei verschiedenen Basen vorteilhaft auf die resultierenden Eigenschaften auswirken.

In einer weiteren bevorzugten Ausführungsform ist genau eine Basen, von den beschriebenen Basen, enthalten.

In einer bevorzugten Ausführungsform werden, bezogen auf die Gesamtmenge, 0,01 bis 10 Gew.%, vorzugsweise 0,1 bis 5 Gew.%, bevorzugt 0,1 bis 2 Gew.% der Katalysator-Zusammensetzung (d), oder bevorzugt der genannten mindestens einen Base verwendet.

"Bereitstellen", wie hierhin verwendet, bezieht sich auf das Mischen der Bestandteile des Reaktionsgemisches in beliebiger Reihenfolge. Es kann beispielsweise vorteilhaft sein, zunächst zwei oder mehr Bestandteile zusammenzugeben und gegebenenfalls zu einem heterogenen oder homogenen Gemisch zu mischen, bevor die restlichen Bestandteile hinzuzugeben werden. So kann beispielsweise zunächst die mindestens eine Epoxidgruppen-enthaltende Verbindung und die Katalysator-Zusammensetzung kombiniert und gemischt und anschließend, beispielsweise kurz vor dem Härten, die mindestens eine Isocyanatgruppen-enthaltende Verbindung zugegeben und in die anderen bereits durchmischten Bestandteile eingemischt werden. Zwischen den verschiedenen Kombinations- und Mischschritten kann es vorteilhaft sein, das Reaktionsgemisch auf Raumtemperatur abzukühlen.

Generell können die einzelnen Bestandteile des Reaktionsgemischs als solche oder als Lösung in einem Lösungsmittel, wie beispielsweise einem organischen Lösungsmittel oder einem Gemisch organischer Lösungsmittel, eingesetzt werden. Hierzu ist jedes bekannte und für den erfindungsgemäßen Zweck geeignete Lösungsmittel einsetzbar. So kann das Lösungsmittel beispielsweise ein hochsiedendes organisches Lösungsmittel sein. Das Lösungsmittel kann ausgewählt sein aus der Gruppe bestehend aus Petroleum, Benzen, Toluen, Xylen, Ethylbenzen und Mischungen davon. Da die Epoxid- und Isocyanatverbindungen vorzugsweise aus flüssigen, niedrigviskosen Monomeren ausgewählt werden, kann in verschiedenen Ausführungsformen die Katalysator-Zusammensetzung als Lösung, wie vorstehend beschrieben, eingesetzt werden.

In verschiedenen Ausführungsformen umfasst das Reaktionsgemisch neben dem Epoxid (a), dem Isocyanat (b), dem Polyol (c) und der Katalysator-Zusammensetzung (d) zusätzliche Bestandteile, wie sie im Stand der Technik als solche bekannt und üblich sind.

Beispielsweise kann als weiterer Bestandteil ein modifiziertes Harz eingesetzt werden, das den nach der Härtung erhältlichen Zusammensetzungen eine verbesserte Schlagfestigkeit und Niedertemperatureigenschaften verleiht. Modifizierte Epoxidgruppen-haltige Harze dieser Art sind im Stand der Technik bekannt und umfassen Reaktionsprodukte von Epoxidharzen mit einer Epoxid-Funktionalität von mehr als 1 mit Carboxy-funktionellen Kautschuken, Dimerfettsäuren oder sogenannte Kern/Schale-Polymeren (core/shell-polymers), deren Kerne eine Glasübergangstemperatur von unter -30°C aufweisen. Das Epoxidgruppen-haltige Harz wird in diesem Fall vorzugsweise in einem stöchiometrischen Überschuss eingesetzt und erzeugt ein epoxidfunktionelles Reaktionsprodukt. Der Überschuss an Epoxidgruppen-enthaltendem Harz kann auch weit über dem stöchiometrischen Überschuss liegen. Eine Epoxid-Funktionalität von größer als 1 bedeutet, dass die Verbindungen mehr als 1, vorzugsweise mindestens 2, 1,2-Epoxidgruppen pro Molekül enthalten. Es sind solche modifizierten Epoxidgruppen-haltigen Harze vorteilhaft, die ein Epoxidäquivalentgewicht zwischen 150 und 4000 aufweisen.

Epoxidgruppen-haltige Harze können auch insbesondere mit einem Copolymer eines 1,3-Diens oder einem ethylenisch ungesättigtem Co-Monomer und/oder mit Kern/Schale-Partikeln (CSR core-shell-rubber) modifiziert sein. Diese modifizierten Harze werden zusätzlich zu dem Epoxidharz (a) und dem Isocyanat (b) eingesetzt.

Zusätzlich zu den vorstehend genannten können neben dem mindestens einem Polyol weitere Zähigkeitsvermittler ("toughener"), wie beispielsweise Flüssigkautschuke (liquid rubbers) eingesetzt werden.

Das hierin beschriebenen Reaktionsgemisch kann mit weiteren Bestandteilen, wie zum Beispiel den vorstehend beschriebenen Zähigkeitsvermittlern, in Form einer Klebstoffzusammensetzung oder eines Injektionsharzes kombiniert werden.

Derartige Klebstoffzusammensetzungen bzw. Injektionsharze können eine Vielzahl anderer Komponenten enthalten, von denen alle dem Fachmann auf dem Gebiet bekannt sind, einschließlich, aber nicht beschränkt auf häufig verwendete Hilfsstoffe und Additive, wie zum Beispiel Füllstoffe, Weichmacher, reaktive und/oder nichtreaktive Verdünnungsmittel, Fließmittel, Kopplungsmittel (z.B. Silane), Haftvermittler, Netzmittel, Trennmittel, Flammschutzmittel, Netzmittel, Thixotropiermittel und/oder rheologische Hilfsstoffe (z.B. pyrogene Kieselsäure), Alterungs- und/oder Korrosionsinhibitoren, Stabilisatoren und/oder Farbstoffe. Je nach Anforderung an den Klebstoff bzw. das Injektionsharz und seine Anwendung und im Hinblick auf die Produktion, Flexibilität, Festigkeit und Verklebung mit Substraten, werden die Hilfs- und Zusatzstoffe in unterschiedlichen Mengen in die Zusammensetzung eingearbeitet.

In verschiedenen Ausführungsformen der Erfindung, wird das Reaktionsgemisch je nach gewünschter Verwendung auf ein Substrat aufgetragen, beispielsweise bei Verwendung als Klebstoff, oder in ein Formwerkzeug eingefüllt, bei der Verwendung als Formmasse zur Herstellung von Kunststoffteilen. In bevorzugten Ausführungsformen ist das Verfahren ein Spritzpress(RTM)-Verfahren und die Reaktionsmischung ein reaktives Injektionsharz. "Reaktiv", wie in diesem Zusammenhang verwendet, bezieht sich auf die Tatsache, dass das Injektionsharz chemisch vernetzbar ist. Bei dem RTM-Verfahren kann das Bereitstellen des Reaktionsgemischs, d.h. Schritt (1) des beschriebenen Verfahrens, das Einfüllen, insbesondere Einspritzen (Injektion), des Injektionsharzes in ein Formwerkzeug umfasse. Bei der Herstellung von faserverstärkten Kunststoffteilen, wofür die beschriebenen Verfahren und Reaktionsgemische besonders geeignet sind, können vor dem Einspritzen in das Formwerkzeug in dieses Fasern oder Faserhalbzeuge (Prewovens/Preform) eingelegt werden. Als Fasern und/oder Faserhalbzeuge können die im Stand der Technik für diese Anwendung bekannten Materialien, insbesondere Kohlenstofffasern verwendet werden.

Die Erfindung betrifft ferner die im Zusammenhang mit den Verfahren beschriebenen Reaktionsgemische, d.h. Harzzusammensetzungen, die bezogen auf deren Gesamtgewicht (a) 9,0 bis 82,5 Gew.-% mindestens eines flüssigen, aromatischen Epoxidharzes; (b) 16,5 bis 90,0 Gew.-% mindestens eines flüssigen, aromatischen Polyisocyanats; (c) 1,0 bis 20,0 Gew.-% mindestens eines Polyols; und (d) 0,01 bis 10,0 Gew.-% mindestens einer Katalysator-Zusammensetzung enthalten, wobei das mindestens eine Epoxidharz bezogen auf das mindestens eine Polyisocyanat in Mengen eingesetzt wird, dass das molare Äquivalentverhältnis von Isocyanat- zu Epoxidgruppen größer 1,2 ist, bevorzugter zwischen 1,2 und 10, noch bevorzugter zwischen 1,25 und 5, noch weiter bevorzugt zwischen 1,3 und 4 und am bevorzugtesten zwischen 1,4 und 2 beträgt.

In verschiedenen Ausführungsformen sind derartige Harzzusammensetzungen Klebstoffzusammensetzungen oder Injektionsharze. Die Injektionsharze sind vorzugsweise pumpbar und insbesondere für das Spritzpressen (RTM-Verfahren) geeignet. In verschiedenen Ausführungsformen hat der Reaktionsgemisch daher bei einer Temperatur von 80°C, d.h. einer typischen Infusionstemperatur, eine Viskosität von <100 mPas. Zur Bestimmung der Viskosität wird die Harzmischung bei Raumtemperatur mit einem geeigneten Mischer hergestellt und auf einem Platte/Platte Rheometer in Oszillation die Viskosität bei steigender Temperatur mit einer Heizrate von 50 K/min bestimmt.

Die Erfindung betrifft in einer Ausführungsform daher auch die mittels der erfindungsgemäßen Harzsysteme im RTM-Verfahren erhältlichen Formteile. Die RTM-Verfahren, in denen die beschriebenen Harzsysteme (Polymerzusammensetzungen) eingesetzt werden können, sind als solche im Stand der Technik bekannt und können von dem Fachmann ohne Weiteres derart angepasst werden, dass das erfindungsgemäße Reaktionsgemisch eingesetzt werden kann.

Die offenen Zeiten der Harzzusammensetzungen (Reaktionsgemisch), wie hierin beschrieben, sind vorzugsweise größer als 90 Sekunden und liegen besonders bevorzugt im Bereich von 2 bis 5 Minuten, insbesondere bei ungefähr 3 Minuten. "Ungefähr", wie hierin im Zusammenhang mit einem Zahlenwert verwendet, bedeutet der Zahlenwert ±10%.

Je nach Art der eingesetzten Epoxide und Isoyanate sowie abhängig von der Katalysator-Zusammensetzung und der Verwendung der gehärteten Zusammensetzung kann die Reaktionsmischung in Schritt (2) des erfindungsgemäßen Verfahrens bei unterschiedlichen Reaktionstemperaturen gehärtet werden. So kann die Härtungstemperatur zwischen 10°C und 230°C legen. Generell kann die Härtung bei erhöhter Temperatur, d.h. >25°C, erfolgen. Vorzugsweise werden die Harze zwischen 50°C und 190°C und bevorzugt zwischen 90°C und 150°C gehärtet. Die Dauer der Härtung hängt ebenfalls von den zu härtenden Harzen und der Katalysator-Zusammensetzung ab und kann zwischen 0,01 Stunden bis 10 Stunden liegen.

Vorzugsweise dauert der Härtungszyklus wenige Minuten, d.h. insbesondere 1 bis 5 Minuten. Die Härtung kann ein- oder auch mehrstufig erfolgen.

Während der Härtung reagiert das Epoxidgruppen-enthaltende Harz mit dem Isocyanat in Anwesenheit des Katalysators unter Bildung mindestens eines Oxazolidinons, das die Harze miteinander vernetzt und der gehärteten Zusammensetzung unter anderem ihre vorteilhaften physikalischen Eigenschaften verleiht. Das bei der Härtung gebildete mindestens eine Oxazolidinon kann eines von 1,2-Oxazolidin-3-on, 1,2-Oxazolidin-4-on, 1,2-Oxazolidin-5-on, 1,3-Oxazolidin-2-on, 1,3-Oxazolidin-4-on, oder 1,3-Oxazolidin-5-on sein. So kann die gehärtete Zusammensetzung auch mehrere, verschiedene der vorgenannten Oxazolidinonisomere enthalten.

Ferner reagieren die Isocyanatgruppen untereinander in Anwesenheit der hierin beschriebenen Katalysator-Zusammensetzung unter Bildung mindestens eines Isocyanurats, das die Harze miteinander vernetzt und ebenfalls zu den vorteilhaften Eigenschaften der gehärteten Zusammensetzung beiträgt.

Die mittels der hierin beschriebenen Katalysatorsysteme und Verfahren gehärteten Harze haben vorzugsweise einen kritischen Spannungsintensitätsfaktor K1c von >0,8, vorzugsweise mindestens 1,0, noch bevorzugter von >1,2 und am bevorzugtesten von >1,5. Die Glasübergangstemperatur der ausgehärteten Harze (Tg (tan δ) mittels DTMA) liegt, in verschiedenen Ausführungsformen, im Bereich von mehr als 100°C, insbesondere mehr als 150°C, typischerweise im Bereich bis 200°C. Der Elastizitätsmodul der ausgehärteten Harze liegt vorzugsweise bei mindestens 2500 N/mm², vorzugsweise mindestens 3000 N/mm², typischerweise im Bereich von 2500 bis 5000 N/mm².

Des Weiteren betrifft die vorliegende Erfindung die gehärtete Zusammensetzung, die nach dem hierin beschriebenen Verfahren erhältlich ist. Diese kann, abhängig von dem Verfahren, als Formteil, insbesondere als faserverstärktes Kunststoffformteil vorliegen. Derartige Formteile werden vorzugsweise im Automobilbau eingesetzt.

So eignen sich die gehärteten Polymerzusammensetzung besonders als Matrixharz für Faserverbundwerkstoffe. Dabei können diese in verschiedenen Anwendungsverfahren eingesetzt werden, beispielsweise im Resin-Transfer-Moulding-Verfahren (RTM-Verfahren) oder im Infusionsverfahren.

Als Faserbestandteile der Faserverbundwerkstoffe sind bekannte hochfeste Faserwerkstoffe geeignet. Diese können beispielsweise aus Glasfasern; synthetischen Fasern, wie Polyesterfasern, Polyethylenfasern, Polypropylenfasern, Polyamidfasern, Polyimidfasern oder Aramidfasern; Kohlenstofffasern; Borfasern; oxidischen oder nicht oxidischen Keramikfasern, wie Aluminiumoxid/Siliciumdioxidfasern, Siliciumcarbidfasern; Metallfasern, beispielsweise aus Stahl oder Aluminium; oder aus Naturfasern, wie Flachs, Hanf oder Jute bestehen. Diese Fasern können in Form von Matten, Geweben, Gewirken, Gelegen, Vliesen oder Rovings eingebracht werden. Es können auch zwei oder mehr dieser Fasermaterialien als Gemisch verwendet werden. Es können Kurzschnittfasern ausgewählt werden, bevorzugt werden jedoch synthetische Langfasern eingesetzt, insbesondere Gewebe und Gelege. Solche hochfesten Fasern, Gelege, Gewebe und Rovings sind dem Fachmann bekannt.

Insbesondere soll der Faserverbundwerkstoff Fasern in einem Volumenanteil von mehr als 20 Vol.-%, bevorzugt mehr als 40 Vol.-%, insbesondere bevorzugt zwischen 50 und 70 Vol.-% bezogen auf den gesamten Faserverbundwerkstoff enthalten, um besonders gute mechanische Eigenschaften zu erzielen. Im Falle von Kohlefasern wird der Volumenanteil gemäß der Norm DIN EN 2564:1998-08 bestimmt, im Falle von Glasfasern gemäß der Norm DIN EN ISO 1172:1998-12.

Ein solcher Faserverbundwerkstoff eignet sich insbesondere als Automobilbauteil. Solche Faserverbundwerkstoffe weisen gegenüber Stahl mehrere Vorteile auf, so sind sie leichter, zeichnen sich durch eine verbesserte Crash-Resistenz aus und sind außerdem langlebiger.

Es ist im Übrigen selbstverständlich, dass alle Ausführungsformen, die oben im Zusammenhang mit den erfindungsgemäßen Verfahren offenbart wurden, auch genauso in den beschriebenen Harzsystemen und gehärteten Zusammensetzungen anwendbar sind und umgekehrt.

### Beispiele

Gemäß den Gewichtsangaben in den folgenden Tabellen 1 und 2 wurden ein Diglycidylether von Bisphenol A (DEGBA; Epoxidequivalent von 187 g/mol), eine Katalysator-Zusammensetzung (EMI: 2-Ethyl-4-Methylimidazol; DBU: Diazabicycloundecen) und ggf. ein Polypropylenglykol (Mw 2000g/mol) für 30s bei 2000 U/min im Vakuum im Speedmixer gemischt. Nach Abkühlen dieses Gemischs auf RT, wurde eine Mischung aus Methylendiphenyldiisocyanat (MDI) und Polymeren davon (PMDI), mit einem NCO-Equivalentgewicht von 129 g/mol, hinzugegeben und ebenfalls für 30s bei 2000 U/min im Vakuum mittels Speedmixer eingemischt. Die Reaktionsmischung wurde in PTFE-Formen gegossen, um normgerechte Prüfkörper zur Bestimmung der mechanischen Daten zu generieren. Die Harzmischung wurde zunächst für 8 min bei 100°C in der Form geliert. Anschließend werden die Prüfkörper entformt und für 30min bei 130°C und folgend 30min bei 180°C nachgehärtet. Die mechanische Kennwerte wurden entsprechend ermittelt: Zugversuch nach EN-ISO 527; 3-Punkt-Biegung nach EN-ISO 178; Bruchzähigkeit nach IOS 13586; Tg mittels DMTA.

Anhand der mechanischen Eigenschaften der Versuche, die in den Tabellen 1 und 2 angegeben sind, sieht man, dass die Beispiele mit einem Polyol und einem Überschuss von Isocyanatgruppen von mindestens 1,2 ein ausgewogenes Eigenschaftsprofil aufweisen, bei denen sowohl das E-Modul, der K1c-Wert und die Glasübergangstemperatur auf dem gewünschten Niveau liegen.

**Tabelle 1**

| | **NCO/EP** | **DEGBA** | **MDI** | **Polyol** | **EMI24** | **DBU** | ***E Modul*/ *MPa*** | ***Fmax*/ *MPa*** | ***ε-Fmax*/ %** | ***K1c*** | ***TG* G"** | ***TG tan d*** |
|---|---|---|---|---|---|---|---|---|---|---|---|---|
| 1 | **1,20** | 54,0 | 44,8 | | | 1,4 | 2484 | 138,5 | 6,64 | | 158 | 203 |
| 2 | **1,41** | 50,0 | 48,6 | | | 1,4 | 3083 | 136 | 4,34 | 0,66 | 166 | 183 |
| 3 | **1,73** | 45,0 | 53,6 | | | 1,4 | 3268 | 81,2 | 2,39 | 0,58 | 176 | 190 |
| 4 | **2,12** | 40,0 | 58,6 | | | 1,4 | 3315 | 64,6 | 1,87 | 0,58 | 193 | 235 |
| 5 | **1,41** | 49,5 | 48,1 | | 1,0 | 1,4 | 2978 | 74,5 | 2,11 | 0,52 | 162 | 185 |
| 6 | **2,01** | 40,9 | 56,7 | | 1,0 | 1,4 | 3233 | 100,1 | 2,90 | 0,66 | 170 | 201 |
| 7 | **1,20** | 52,5 | 43,6 | 2,5 | | 1,4 | 2814 | 93,1 | 3,19 | 0,84 | 168 | 198 |
| 8 | **1,30** | 50,0 | 44,7 | 3,3 | | 1,3 | 2671 | 56,2 | 1,99 | 0,86 | 172 | |
| 9 | **0,69** | 63,4 | 30,2 | 5,0 | | 1,4 | SCHÄUMT STARK AUF | | | | | 215 |
| 10 | **1,13** | 52,5 | 41,1 | 5,0 | | 1,4 | SCHÄUMT STARK AUF | | | | 162 | 198 |
| 11 | **1,20** | 50,5 | 42,3 | 5,0 | | 1,4 | 2424 | 190,6 | 3,66 | 1,53 | 157 | |
| 12 | **1,41** | 47,5 | 46,1 | 5,0 | | 1,4 | 2532 | 84,1 | 3,66 | 1,1 | 164 | 186 |
| 13 | **1,57** | 45,0 | 48,6 | 5,0 | | 1,4 | 2674 | 75,2 | 2,84 | 0,85 | 172 | 205 |
| 14 | **0,68** | 62,9 | 29,7 | 5,0 | 1,0 | 1,4 | SCHÄUMT STARK AUF | | | | | 189 |
| 15 | **1,00** | 54,9 | 37,8 | 5,0 | 1,0 | 1,4 | SCHÄUMT STARK AUF | | | | | 179 |
| 16 | **1,13** | 52,0 | 40,6 | 5,0 | 1,0 | 1,4 | 2652 | 129,6 | 5,98 | 0,92 | 159 | 177 |
| 17 | **1,20** | 50,5 | 42,3 | 5,0 | 1,0 | 1,4 | 2532 | 103,3 | 4,60 | 1,88 | 157 | 202 |
| 18 | **1,67** | 43,0 | 49,6 | 5,0 | 1,0 | 1,4 | 3043 | 80,6 | 2,56 | 0,82 | 165 | 274 |

**Tabelle 2**

| | **NCO/EP** | **DEGBA** | **MDI** | **Polyol** | **EMI24** | **DBU** | ***E Modul*/ *MPa*** | ***Fmax*/ *MPa*** | ***ε-Fmax*/ %** | ***K1c*** | ***TG* G"** | ***TG tan d*** |
|---|---|---|---|---|---|---|---|---|---|---|---|---|
| 19 | **1,00** | 52,5 | 36,1 | 10,0 | | 1,4 | SCHÄUMT STARK AUF | | | | 154 | 168 |
| 20 | **1,20** | 48,0 | 39,8 | 10,0 | | 1,4 | 2152 | 92,1 | 4,50 | 1,58 | 157 | 212 |
| 21 | **1,40** | 45,0 | 43,6 | 10,0 | | 1,4 | 2264 | 73,1 | 3,29 | 1,54 | 162 | 173 |
| 22 | **2,00** | 37,2 | 51,4 | 10,0 | | 1,4 | 2203 | 61,4 | 2,88 | 0,9 | 171 | 202 |
| 23 | **3,00** | 28,5 | 58,9 | 10,0 | 0,9 | 1,2 | 2181 | 73,6 | 3,29 | 0,7 | 172 | 227 |
| 24 | **4,00** | 23,2 | 64,1 | 10,0 | 0,9 | 1,2 | 2309 | 57,4 | 2,38 | 0,7 | 175 | 220 |
| 25 | **1,40** | 44,5 | 43,1 | 10,0 | 1,0 | 1,4 | 2544 | 78,0 | 3,37 | 1,27 | 156 | 176 |
| 26 | **1,51** | 42,8 | 44,7 | 10,0 | 1,0 | 1,4 | 2580 | 93,5 | 3,81 | 1,02 | 161 | 191 |
| 27 | **1,67** | 40,7 | 46,9 | 10,0 | 1,0 | 1,4 | 2672 | 95,9 | 3,68 | 1,03 | 164 | 248 |
| 28 | **1,77** | 39,5 | 48,1 | 10,0 | 1,0 | 1,4 | 2697 | 101,5 | 4,08 | 0,97 | 163 | 146 |
| 29 | **2,00** | 36,8 | 50,8 | 10,0 | 1,0 | 1,4 | 2398 | 104,0 | 4,92 | 0,89 | 165 | 182 |

## Patentansprüche

1. Verfahren zur Herstellung einer gehärteten Polymerzusammensetzung, die mindestens einen Oxazolidinonring und mindestens einen Isocyanuratring umfasst, wobei das Verfahren die Schritte umfasst:
(1) Bereitstellen eines bei Raumtemperatur (20 °C) und Normaldruck (1013 mbar) fließfähigen Reaktionsgemisches umfassend bezogen auf dessen Gesamtgewicht:
(a) 9,0 bis 82,5 Gew.-% mindestens eines bei Raumtemperatur (20 °C) und Normaldruck (1013 mbar) fließfähigen, aromatischen Epoxidharzes;
(b) 16,5 bis 90,0 Gew.-% mindestens eines bei Raumtemperatur (20 °C) und Normaldruck (1013 mbar) fließfähigen, aromatischen Polyisocyanats;
(c) 1,0 bis 20,0 Gew.-% mindestens eines Polyols; und
(d) 0,01 bis 10,0 Gew.-% mindestens einer Katalysator-Zusammensetzung, wobei das mindestens eine Epoxidharz bezogen auf das mindestens eine Polyisocyanat in Mengen eingesetzt wird, dass das molare Äquivalentverhältnis von Isocyanat- zu Epoxidgruppen größer 1,2 ist, bevorzugter zwischen 1,2 und 10, noch bevorzugter zwischen 1,25 und 5, noch weiter bevorzugt zwischen 1,3 und 4 und am bevorzugtesten zwischen 1,4 und 2 beträgt; und
(2) Härten des Reaktionsgemisches, um eine gehärtete Polymerzusammensetzung, die mindestens einen Oxazolidinonring und mindestens einen Isocyanuratring umfasst, zu erhalten.

2. Verfahren nach Anspruch 1, **dadurch gekennzeichnet, dass** das mindestens eine Epoxidharz ein Glycidylether, insbesondere ein aromatischer Diglycidylether ist, besonders bevorzugt ein Bisphenol Diglycidylether.

3. Verfahren nach Anspruch 1 oder 2, **dadurch gekennzeichnet, dass** das mindestens eine Polyisocyanat ein Methylendiphenyldiisocyanat (MDI) ist.

4. Verfahren nach einem der Ansprüche 1 bis 3, **dadurch gekennzeichnet, dass** das mindestens eine Polyol ausgewählt ist aus der Gruppe bestehend aus Polyetherpolyol, Polyesterpolyol und Mischungen davon.

5. Verfahren nach Anspruch 4, **dadurch gekennzeichnet, dass** das mindestens eine Polyol ausgewählt ist aus der Gruppe bestehend aus Polyethylenglykol, Polypropylenglykol, Polytetramethylenglykol, Polyhexamethylenglykol und Mischungen davon, vorzugsweise aus der Gruppe bestehend aus Polyethylenglykol, Polypropylenglykol und Mischungen davon und noch bevorzugter Propylenglykol ist.

6. Verfahren nach einem der Ansprüche 1 bis 5, **dadurch gekennzeichnet, dass** die Katalysator-Zusammensetzung mindestens eine Base enthält, die mindestens ein tertiäres Stickstoffatom und/oder ein Imin-Stickstoffatom umfasst, insbesondere ein Imidazol oder Imidazolidin ist.

7. Verfahren nach einem der Ansprüche 1 bis 6, **dadurch gekennzeichnet, dass** die Katalysator-Zusammensetzung keine Base enthält, die auf einem Imidazolium-Kation basiert.

8. Verfahren nach Anspruch 6, **dadurch gekennzeichnet, dass** die Stickstoff-haltige Base eine Base ist ausgewählt aus der Gruppe bestehend aus 1-Methylimidazol, 2,4-Ethylmethylimidazol (EMI), 4-Dimethylaminopyridin, 1,4-Diazabicyclo[2.2.2]octan (DABCO), 1,8-Diazabicyclo[5.4.0]undec-7-en (DBU), 1,5-Diazobicyclo[3.4.0]non-5-en (DBN) und Mischungen davon, vorzugsweise aus der Gruppe bestehend aus 2,4-Ethylmethylimidazol (EMI), 1,8-Diazabicyclo[5.4.0]undec-7-en (DBU) und Mischungen davon.

9. Verfahren nach einem der Ansprüche 1 bis 8, **dadurch gekennzeichnet, dass**
(a)das Reaktionsgemisch weniger als 0,05 Gew.-% an Epoxidhärtern, die eine Polyadditionsreaktion eingehen, enthält;
(b)das Reaktionsgemisch bei einer Temperatur von 80°C eine Viskosität von <100 mPas aufweist, bestimmt auf einem Platte/Platte Rheometer in Oszillation bei steigender Temperatur mit einer Heizrate von 50 K/min;
(c)die gehärtete Polymerzusammensetzung ein Elastizitätsmodul gemäß Zugversuch nach EN-ISO 527 von mehr als 2500, vorzugsweise mehr als 3000 N/mm² aufweist; und/oder
(d)die gehärtete Polymerzusammensetzung eine Glasübergangstemperatur, gemessen mittels DMTA, von mehr als 100, insbesondere mehr als 150 °C aufweist.

10. Verfahren nach einem der Ansprüche 1 bis 9, **dadurch gekennzeichnet, dass**
(a) das Reaktionsgemisch in Schritt (2) bei einer Temperatur zwischen 10 °C und 230 °C, vorzugsweise zwischen 50 °C und 190 °C und bevorzugt zwischen 90 °C und 150 °C für 0,01 Stunden bis 10 Stunden, vorzugsweise für 0,1 Stunden bis 5 Stunden bevorzugt für 1 Stunde gehärtet wird; oder
(b) das Reaktionsgemisch in Schritt (2) zunächst bei einer Temperatur zwischen 50 °C und 130 °C, vorzugsweise 70 °C und 110 °C und bevorzugt bei 90 °C für 0,1 Stunden bis 3 Stunden, vorzugsweise für 0,5 Stunden bis 2 Stunden, bevorzugt für 1 Stunde und anschließend bei einer Temperatur zwischen 110 °C und 190 °C, vorzugsweise 130 °C und 170 °C und bevorzugt bei 150 °C für 0,1 Stunden bis 3 Stunden, vorzugsweise für 0,5 Stunden bis 2 Stunden, bevorzugt für 1 Stunde gehärtet wird.

11. Verfahren nach einem der Ansprüche 1 bis 10, **dadurch gekennzeichnet, dass** das Verfahren ein Spritzpress(RTM)-Verfahren und die Reaktionsmischung ein reaktives Injektionsharz ist.

12. Verfahren nach Anspruch 11, **dadurch gekennzeichnet, dass** Schritt (1) das Einspritzen des Injektionsharzes in ein Formwerkzeug, in das Fasern oder Faserhalbzeuge (Prewovens/Preform) eingelegt sind, umfasst.

13. Harzzusammensetzung, **dadurch gekennzeichnet, dass** die Harzzusammensetzung bezogen auf deren Gesamtgewicht
(a) 9,0 bis 82,5 Gew.-% mindestens eines bei Raumtemperatur (20 °C) und Normaldruck (1013 mbar) fließfähigen, aromatischen Epoxidharzes;
(b) 16,5 bis 90,0 Gew.-% mindestens eines bei Raumtemperatur (20 °C) und Normaldruck (1013 mbar) fließfähigen, aromatischen Polyisocyanats;
(c) 1,0 bis 20,0 Gew.-% mindestens eines Polyols; und
(d) 0,01 bis 10,0 Gew.-% mindestens einer Katalysator-Zusammensetzung enthält,
wobei das mindestens eine Epoxidharz bezogen auf das mindestens eine Polyisocyanat in Mengen eingesetzt wird, dass das molare Äquivalentverhältnis von Isocyanat- zu Epoxidgruppen größer 1,2 ist, bevorzugter zwischen 1,2 und 10, noch bevorzugter zwischen 1,25 und 5, noch weiter bevorzugt zwischen 1,3 und 4 und am bevorzugtesten zwischen 1,4 und 2 beträgt.

14. Gehärtete Polymerzusammensetzung erhältlich nach einem Verfahren der Ansprüche 1 bis 12.

15. Gehärtete Polymerzusammensetzung nach Anspruch 14, **dadurch gekennzeichnet, dass** die Polymerzusammensetzung ein Formteil, insbesondere ein faserverstärktes Formteil ist.

## Claims

1. A method for preparing a cured polymer composition which comprises at least one oxazolidinone ring and at least one isocyanurate ring, wherein the method comprises the steps of:
(1) providing a reaction mixture which is flowable at room temperature (20 °C) and normal pressure (1013 mbar) and comprises, based on the total weight thereof:
(a) 9.0 to 82.5 wt.% of at least one aromatic epoxy resin which is flowable at room temperature (20 °C) and normal pressure (1013 mbar);
(b) 16.5 to 90.0 wt.% of at least one aromatic polyisocyanate which is flowable at room temperature (20 °C) and normal pressure (1013 mbar);
(c) 1.0 to 20.0 wt.% of at least one polyol; and
(d) 0.01 to 10.0 wt.% of at least one catalyst composition, wherein the at least one epoxy resin, based on the at least one polyisocyanate, is used in such amounts that the molar equivalent ratio of isocyanate groups to epoxide groups is greater than 1.2, preferably between 1.2 and 10, more preferably between 1.25 and 5, even more preferably between 1.3 and 4 and most preferably between 1.4 and 2; and
(2) curing the reaction mixture in order to obtain a cured polymer composition which comprises at least one oxazolidinone ring and at least one isocyanurate ring.

2. The method according to claim 1, **characterized in that** the at least one epoxy resin is a glycidyl ether, in particular an aromatic diglycidyl ether, particularly preferably a bisphenol diglycidyl ether.

3. The method according to claim 1 or 2, **characterized in that** the at least one polyisocyanate is a methylene diphenyl diisocyanate (MDI).

4. The method according to one of claims 1 to 3, **characterized in that** the at least one polyol is selected from the group consisting of polyether polyol, polyester polyol and mixtures thereof.

5. The method according to claim 4, **characterized in that** the at least one polyol is selected from the group consisting of polyethylene glycol, polypropylene glycol, polytetramethylene glycol, polyhexamethylene glycol and mixtures thereof, preferably from the group consisting of polyethylene glycol, polypropylene glycol and mixtures thereof and more preferably is propylene glycol.

6. The method according to one of claims 1 to 5, **characterized in that** the catalyst composition contains at least one base which comprises at least one tertiary nitrogen atom and/or an imine nitrogen atom, in particular an imidazole or imidazolidine.

7. The method according to one of claims 1 to 6, **characterized in that** the catalyst composition does not contain a base which is based on an imidazolium cation.

8. The method according to claim 6, **characterized in that** the nitrogen-containing base is a base selected from the group consisting of 1-methylimidazole, 2,4-ethylmethylimidazole (EMI), 4-dimethylaminopyridine, 1,4-diazabicyclo[2.2.2]octane (DABCO), 1,8-diazabicyclo[5.4.0]undec-7-ene (DBU), 1,5-diazabicyclo[3.4.0]non-5-ene (DBN) and mixtures thereof, preferably from the group consisting of 2,4-ethylmethylimidazole (EMI), 1,8-diazabicyclo[5.4.0]undec-7-ene (DBU) and mixtures thereof.

9. The method according to one of claims 1 to 8, **characterized in that**
(a) the reaction mixture contains less than 0.05 wt.% of epoxy curing agents which enter into a polyaddition reaction;
(b) the reaction mixture has a viscosity of <100 mPas at a temperature of 80 °C, determined on a plate/plate rheometer in oscillation with increasing temperature at a heating rate of 50 K/min;
(c) the cured polymer composition has a modulus of elasticity of more than 2500, preferably more than 3000 N/mm², according to a tensile test according to EN-ISO 527; and or
(d) the cured polymer composition has a glass transition temperature of more than 100, in particular more than 150 °C, measured by means of DMTA.

10. The method according to one of claims 1 to 9, **characterized in that**
(a) the reaction mixture in step (2) is cured at a temperature of between 10 °C and 230 °C, preferably between 50 °C and 190 °C and more preferably between 90 °C and 150 °C, for 0.01 to 10 hours, preferably for 0.1 to 5 hours, more preferably for 1 hour; or
(b) the reaction mixture in step (2) is first cured at a temperature of between 50 °C and 130 °C, preferably 70 °C and 110 °C and more preferably at 90 °C, for 0.1 hours to 3 hours, preferably for 0.5 hours to 2 hours, more preferably for 1 hour, and then is cured at a temperature of between 110 °C and 190 °C, preferably 130 °C and 170 °C and more preferably at 150 °C, for 0.1 hours to 3 hours, preferably for 0.5 to 2 hours, more preferably for 1 hour.

11. The method according to one of claims 1 to 10, **characterized in that** the method is a transfer molding (RTM) method and the reaction mixture is a reactive injection resin.

12. The method according to claim 11, **characterized in that** step (1) comprises injecting the injection resin into a die in which fibers or semi-finished fiber products (prewovens/preform) are placed.

13. A resin composition, **characterized in that** the resin composition contains, based on the total weight thereof:
(a) 9.0 to 82.5 wt.% of at least one aromatic epoxy resin which is flowable at room temperature (20 °C) and normal pressure (1013 mbar);
(b) 16.5 to 90.0 wt.% of at least one aromatic polyisocyanate which is flowable at room temperature (20 °C) and normal pressure (1013 mbar);
(c) 1.0 to 20.0 wt.% of at least one polyol; and
(d) 0.01 to 10.0 wt.% of at least one catalyst composition, the at least one epoxy resin, based on the at least one polyisocyanate, being used in such amounts that the molar equivalent ratio of isocyanate groups to epoxide groups is greater than 1.2, preferably between 1.2 and 10, more preferably between 1.25 and 5, even more preferably between 1.3 and 4 and most preferably between 1.4 and 2.

14. A cured polymer composition obtainable by a method according to claims 1 to 12.

15. The cured polymer composition according to claim 14, **characterized in that** the polymer composition is a molded part, in particular a fiber-reinforced molded part.

## Revendications

1. Procédé de fabrication d'une composition polymère réticulée comprenant au moins un cycle oxazolidinone et au moins un cycle isocyanurate, le procédé comprenant les étapes de :
(1) fourniture d'un mélange réactionnel coulant à température ambiante (20 °C) et à pression normale (1 013 mbar), comprenant, en fonction de son poids total :
(a) 9,0 à 82,5 % en poids d'au moins une résine époxy aromatique coulante à température ambiante (20 °C) et à pression normale (1 013 mbar) ;
(b) 16,5 à 90,0 % en poids d'au moins un polyisocyanate aromatique coulant à température ambiante (20 °C) et à pression normale (1 013 mbar) ;
(c) 1,0 à 20,0 % en poids d'au moins un polysaccharide ; et
(d)0,01 à 10,0 % en poids d'au moins une composition catalytique, l'au moins une résine époxy étant utilisée, par rapport à l'au moins un polyisocyanate, en des quantités telles que le rapport d'équivalence molaire des groupes isocyanate aux groupes époxy est supérieur à 1,2, est préférentiellement compris entre 1,2 et 10, plus préférentiellement entre 1,25 et 5, encore plus préférentiellement entre 1,3 et 4, et le plus préférentiellement entre 1,4 et 2 ; et
(2) durcissement du mélange réactionnel afin d'obtenir une composition polymère réticulée, laquelle comprend au moins un cycle oxazolidinone et au moins un cycle isocyanurate.

2. Procédé selon la revendication 1, **caractérisé en ce que** l'au moins une résine époxy est un éther glycidylique, en particulier un éther diglycidylique aromatique, de manière particulièrement préférée un éther diglycidylique de bisphénol.

3. Procédé selon la revendication 1 ou 2, **caractérisé en ce que** l'au moins un polyisocyanate est un méthylènediphényl diisocyanate (MDI).

4. Procédé selon l'une des revendications 1 à 3, **caractérisé en ce que** l'au moins un polyol est choisi dans le groupe constitué par le polyéther polyol, le polyester polyol et leurs mélanges.

5. Procédé selon la revendication 4, **caractérisé en ce que** l'au moins un polyol est choisi dans le groupe constitué par le polyéthylène glycol, le polypropylène glycol, le polytétraméthylène glycol, le polyhexaméthylène glycol et leurs mélanges, de préférence dans le groupe constitué par le polyéthylène glycol, le polypropylène glycol et leurs mélanges et plus préférentiellement du propylène glycol.

6. Procédé selon l'une des revendications 1 à 5, **caractérisé en ce que** la composition catalytique contient au moins une base qui comprend au moins un atome d'azote tertiaire et/ou un atome d'azote d'imine, en particulier un imidazole ou une imidazolidine.

7. Procédé selon l'une des revendications 1 à 6, **caractérisé en ce que** la composition catalytique ne contient pas de base à base d'un cation imidazole.

8. Procédé selon la revendication 6, **caractérisé en ce que** la base azotée est une base choisie dans le groupe constitué par le 1-méthylimidazole, le 2,4-éthylméthylimidazole (EMI), la 4-diméthylaminopyridine, le 1,4-diazabicyclo[2.2.2]octane (DABCO), 1,8-diazabicyclo[5.4.0]undec-7-en (DBU), 1,5-diazobicyclo[3.4.0]non-5-en (DBN) et leurs mélanges, de préférence du groupe constitué par le 2,4-éthylméthylimidazole (EMI), le 1,8-diazabicyclo[5.4.0]undec-7-en (DBU) et leurs mélanges.

9. Procédé selon l'une des revendications 1 à 8, **caractérisé en ce que**
(a) le mélange réactionnel contient moins de 0,05 % en poids de durcisseurs époxy, lesquels débutent une réaction de polyaddition ;
(b) le mélange réactionnel présente une viscosité < 100 mPas à une température de 80 °C, déterminée sur un rhéomètre plan/plan en oscillation au fur et à mesure que la température monte à une vitesse de chauffe de 50 K/min ;
(c) la composition polymère réticulée présente un module d'élasticité selon le test de traction selon EN-ISO 527 supérieur à 2 500, de préférence supérieur à 3 000 N/mm² ; et/ou
(d) la composition polymère réticulée présente une température de transition vitreuse, mesurée au moyen de DMTA, supérieure à 100, en particulier supérieure à 150 °C.

10. Procédé selon l'une des revendications 1 à 9, **caractérisé en ce que**
(a) le mélange réactionnel est durci, à l'étape (2), à une température comprise entre 10 °C et 230 °C, de préférence entre 50 °C et 190 °C et préférentiellement entre 90 °C et 150 °C, pendant 0,01 heure à 10 heures, de préférence pendant 0,1 heure à 5 heures, préférentiellement pendant 1 heure ; ou
(b) le mélange réactionnel est durci, à l'étape (2), initialement à une température comprise entre 50 °C et 130 °C, de préférence entre 70 °C et 110 °C et préférentiellement à 90°C, pendant 0,1 heure à 3 heures, de préférence pendant 0,5 heure 2 heures, préférentiellement pendant 1 heure, puis à une température comprise entre 110 °C et 190 °C, de préférence entre 130 °C et 170 °C et préférentiellement à 150 °C, pendant 0,1 heure à 3 heures, de préférence pendant 0,5 heure à 2 heures, de préférence pendant 1 heure.

11. Procédé selon l'une des revendications 1 à 10, **caractérisé en ce que** le procédé est un procédé de moulage par injection (RTM) et le mélange réactionnel est une résine d'injection réactive.

12. Procédé selon la revendication 11, **caractérisé en ce que** l'étape (1) comprend l'injection de la résine d'injection dans un outil de moulage, dans lequel sont insérées des fibres ou des produits fibreux semi-finis (pré-tissés/préformés).

13. Composition de résine, **caractérisée en ce que** la composition de résine contient, par rapport à son poids total,
(a) 9,0 à 82,5 % en poids d'au moins une résine époxy aromatique coulante à température ambiante (20 °C) et à pression normale (1 013 mbar) ;
(b) 16,5 à 90,0 % en poids d'au moins un polyisocyanate aromatique coulant à température ambiante (20 °C) et à pression normale (1 013 mbar) ;
(c) 1,0 à 20,0 % en poids d'au moins un polysaccharide ; et
(d) 0,01 à 10,0 % en poids d'au moins une composition catalytique, l'au moins une résine époxy étant utilisée, par rapport à l'au moins un polyisocyanate, en des quantités telles que le rapport d'équivalence molaire des groupes isocyanate aux groupes époxy est supérieur à 1,2, est préférentiellement compris entre 1,2 et 10, plus préférentiellement entre 1,25 et 5, encore plus préférentiellement entre 1,3 et 4, et le plus préférentiellement entre 1,4 et 2.

14. Composition polymère réticulée pouvant être obtenue par un procédé selon les revendications 1 à 12.

15. Composition polymère réticulée selon la revendication 14, **caractérisée en ce que** la composition polymère est une pièce moulée, en particulier une pièce moulée renforcée de fibres.
